# EUROPÄISCHE PATENTSCHRIFT

(11) **EP 3 015 317 B1**
(45) Veröffentlichungstag und Bekanntmachung des Hinweises auf die Patenterteilung: **05.12.2018**
(21) Anmeldenummer: 14306744.5
(22) Anmeldetag: 30.10.2014
(51) Int. Cl.: B60R 16/02

(54) **Anordnung zum Befestigen eines langgestreckten Gegenstands in einem Kraftfahrzeug**
Assembly for the attachment of an elongated object in a motor vehicle
Système de fixation d'un objet longitudinal dans un véhicule automobile

(43) Veröffentlichungstag der Anmeldung: 04.05.2016
(73) Patentinhaber: Nexans, 92400 Courbevoie (FR)
(72) Erfinder: Lindner, Gerhard, 95703 Plössberg (DE); Teicher, Hermann, 92702 Kohlberg (DE)
(74) Vertreter: Laget, Jean-Loup

(56) Entgegenhaltungen:
- EP-A2- 1 209 398
- DE-A1-102008 020 894
- US-A- 5 390 876
- US-A- 5 564 672
- US-A1- 2003 005 554
- US-A1- 2007 257 159
- US-A1- 2013 160 246

## Beschreibung

Die Erfindung bezieht sich auf eine Anordnung zum Befestigen mindestens eines langgestreckten Gegenstandes in einem Kraftfahrzeug gemäß dem Oberbegriff des Patentanspruchs 1.

Eine solche Anordnung geht beispielsweise aus der US 2013/0160246 A1 hervor.

In einem Kraftfahrzeug wird eine Vielzahl von verschiedenartigen Leitungen eingesetzt. Beispielsweise müssen elektrische Elemente oder Geräte mit elektrischem Strom versorgt werden. Zu den elektrischen Elementen zählen beispielsweise Leuchtdioden in Scheinwerfern und Rückleuchten, Motoren zum Heben und Senken der Fenster sowie zur Rückspiegelsteuerung, Beleuchtungen des Armaturenbretts, Sensoren und Steuergeräte. Andere Systeme, beispielweise die Scheibenwischanlage, müssen mit Flüssigkeit versorgt werden. Die elektrischen Elemente werden in bekannter Weise mittels elektrischer Leitungen, welche oft zu Kabelbäumen bzw. Kabelsätzen zusammengefaßt sind, mit einer in der Fahrzeugkarosserie angeordneten Zentraleinheit verbunden. Die Kabelsätze können auch Signalleitungen enthalten. Flüssigkeiten können mittels flexibler oder starrer Leitungen transportiert werden.

Der Begriff des langgestreckten Gegenstands in einem Kraftfahrzeug bezieht sich im Folgenden auf einen elektrischen Kabelbaum oder eine Fluidtransportleitung.

Die beschriebenen Leitungen werden innerhalb des Kraftfahrzeugs verlegt und an der Karosserie oder an Bauteilen des Fahrzeugs mittels Halterungs- oder Befestigungselementen an bestimmten Fixpunkten befestigt. Im Motorraum werden die Leitungen beispielsweise am Motor und anderen Bauteilen selbst befestigt und verlaufen oberhalb derselben. In Montageposition decken die Leitungen deshalb verschiedene Bauteile, beispielsweise Filter, ab. Wenn Reparatur- und Wartungsarbeiten am Motor oder einem anderen Bauteil, beispielsweise das Austauschen eines Filters, ausgeführt werden sollen, müssen die Leitungsstränge von ihrer Halterung gelöst und so weit aus ihrer Position weggebogen werden können, daß die zu bearbeitenden Elemente zugänglich gemacht werden. Die eingesetzten Halterungselemente umfassen beispielsweise Kantenclips, an welchen die Leitungen mittels Kabelbindern oder ähnlichen Befestigungsmitteln befestigt sind. Wenn die Leitungen aus ihrer Halterung gelöst werden sollen, muß Werkzeug zu Hilfe genommen werden, und die Kantenclips können beschädigt werden.

Die US 2007/0257159 A1 beschreibt eine Anordnung zur Befestigung von Kabeln an einer T-förmigen Schiene. Dazu wird ein Befestigungselement benutzt, das nach Drehung mittels eines Werkzeugs um 90° in der Schiene gehalten ist. An dem Befestigungselement ist im Montagezustand ein Aufsatz mit einer Mulde angebracht, in welcher ein Kabel mittels eines Kabelbinders befestigt werden kann.

Aus der US 5,390,876 A geht ein Halter zur Befestigung eines Kabelbaums an einem Kraftfahrzeug hervor. Der Halter besteht aus einer Schelle mit zwei Teilen, die über ein Filmscharnier miteinander verbunden sind. Sie werden um einen Kabelbaum herumgelegt und miteinander verriegelt. An einem Teil der Schelle ist eine Erweiterung mit einem Schlitz angebracht. Die Schelle kann auf einen fest am Kraftfahrzeug angebrachten, rechteckigen Streifen aus Metall aufgesteckt werden, der im Montagezustand in den Schlitz der Schelle eingreift und in derselben durch einen Vorsprung festgelegt ist, welcher in eine Öffnung des Streifens eingreift. Die Anordnung ist so ausgeführt, daß der Halter nicht vom Streifen abgenommen werden kann, sondern stabil auf demselben gehalten ist.

In der US 5,564,672 A ist ein System beschrieben, bei dem ein um ein Bündel von Drähten oder Rohren herumgelegtes Band einen von demselben abstehenden, spreizdübelartigen Stab aufweist. Dieser Stab kann in ein Loch eines Trägers eingesteckt werden. Das Bündel von Drähten oder Rohren ist dann an dem Träger befestigt.

Aus der DE 10 2008 020 894 A1 geht eine Anordnung zum Befestigen eines Kabels oder eines Kabelbündels an einer Karosserie eines Automobils hervor. Sie weist eine U-förmige Metallklammer auf, an welcher ein Kabel bzw. ein Kabelbündel in Montageposition mittels eines Kabelbinders befestigt ist. Die Metallklammer besteht aus federndem Material. Sie kann an einer Rippe eines Automobils angebracht werden.

Die EP 1 209 398 A2 beschreibt eine Verbindung zwischen einem mit zwei Leitungen bestückten Halter und einer Wandung eines Kraftfahrzeugs. An dem Halter ist ein flacher Knopf um seine Achse drehbar angebracht, der durch einen Schlitz in der Wandung des Kraftfahrzeugs gesteckt werden kann. Der Knopf kann dann um 90° gedreht werden, wodurch der Halter an der Wandung befestigt ist. Wenn der Knopf um 90° zurückgedreht wird, kann der Halter wieder von der Wandung abgenommen werden.

Die US 2003/0005554 A1 beschreibt eine Anordnung, welche aus zwei durch ein Filmscharnier miteinander verbundenen Halbschalen besteht. An der einen Halbschale ist ein separates, von derselben abstehendes, stiftförmiges Verriegelungsteil angeformt. Das Verriegelungsteil hat dazu einen von demselben abstehenden ersten Riegel, welcher in Verriegelungsposition hinter einem an der Wandung dieser Halbschale angebrachten Sperrelement liegt. Das Verriegelungsteil hat außerdem einen zweiten Riegel, welcher auf der gegenüber dem Riegel anderen Seite desselben von demselben absteht. Dieser zweite Riegel soll in Montageposition in ein Loch eines Bolzens eingreifen. Es soll durch den Finger einer Hand so aus seiner Verriegelungsposition gebracht werden können, dass der zweite Riegel aus dem Loch des Trägers entfernt werden kann.

Die eingangs erwähnte US 2013/0160246A1 bezieht sich auf eine Befestigungsanordnung für Kabel. Sie hat ein Aufnahmeteil mit einem Loch, in das zur Befestigung desselben an einer Unterlage eine Schraube eingeschraubt werden kann. Auf dieses Aufnahmeteil kann ein Schnappkörper ohne den Einsatz eines Werkzeugs aufgesteckt werden, der in der Endposition durch einen Rastmechanismus mit dem Aufnahmeteil verbunden ist, und zwar derart, daß ein Abziehen des Schnappkörpers vom Aufnahmeteil verhindert ist. Wenn der Schnappkörper von dem Aufnahmeteil abgenommen werden soll, wird ein Werkzeug eingesetzt, mittels dessen auf eine Sperrklinke des Schnappkörpers gedrückt werden muß, damit dieselbe aus einem Loch des Aufnahmeteils herausgedrückt werden kann.

Der Erfindung liegt die Aufgabe zugrunde, die eingangs geschilderte Anordnung so weiterzubilden. daß ein langgestreckter Gegenstand so an einem Fixpunkt befestigt werden kann, daß er beliebig oft an dem Fixpunkt befestigt und von diesem wieder gelöst werden kann.

Diese Aufgabe wird entsprechend dem kennzeichnenden Merkmal des Patentanspruchs 1 gelöst.

Diese Anordnung erlaubt die lösbare Befestigung eines langgestreckten Gegenstands an einem Fixpunkt. Der Gegenstand kann in dem Falle, daß die darunter liegenden Bauteile für Reparatur- oder Austauschzwecke zugänglich gemacht werden sollen, einfach und ohne Werkzeug von dem Fixpunkt gelöst und weggebogen werden. Der langgestreckte Gegenstand ist mittels des Befestigungsmittels dauerhaft an dem Befestigungselement befestigt und kann mit diesem weggebogen werden. Nach den erfolgten Arbeiten kann der langgestreckte Gegenstand wieder in seine Montageposition zurückgebracht und mittels des Befestigungselements an dem am Fixpunkt angebrachten Aufnahmeelement befestigt werden. Während des Lösens und Verbindens werden weder das Befestigungselement noch das Aufnahmeelement beschädigt.

Ausführungsbeispiele des Erfindungsgegenstandes sind in den Zeichnungen dargestellt.

Es zeigen:
Fig. 1 in perspektivischer Ansicht ein Ausführungsbeispiel der erfindungsgemäßen Anordnung mit einem befestigten langgestreckten Gegenstand.
Fig. 2 in perspektivischer Ansicht ein Ausführungsbeispiel eines Aufnahmeelements der erfindungsgemäßen Anordnung.
Fig. 3A in perspektivischer Ansicht ein Ausführungsbeispiel eines Befestigungselements der erfindungsgemäßen Anordnung.
Fig. 3B eine andere Ansicht des Befestigungselements nach Fig. 3A.
Fig. 4 eine perspektivische Ansicht dreier erfindungsgemäßer Anordnungen in verschiedenen Ausführungsformen mit einem damit befestigten langgestreckten Gegenstand.
Fig. 5A ein Ausführungsbeispiel eines Aufnahmeelements der erfindungsgemäßen Anordnung.
Fig. 5B ein weiteres Ausführungsbeispiel eines Aufnahmeelements der erfindungsgemäßen Anordnung.

In den Zeichnungen beziehen sich gleiche Bezugszeichen auf gleiche technische Merkmale.

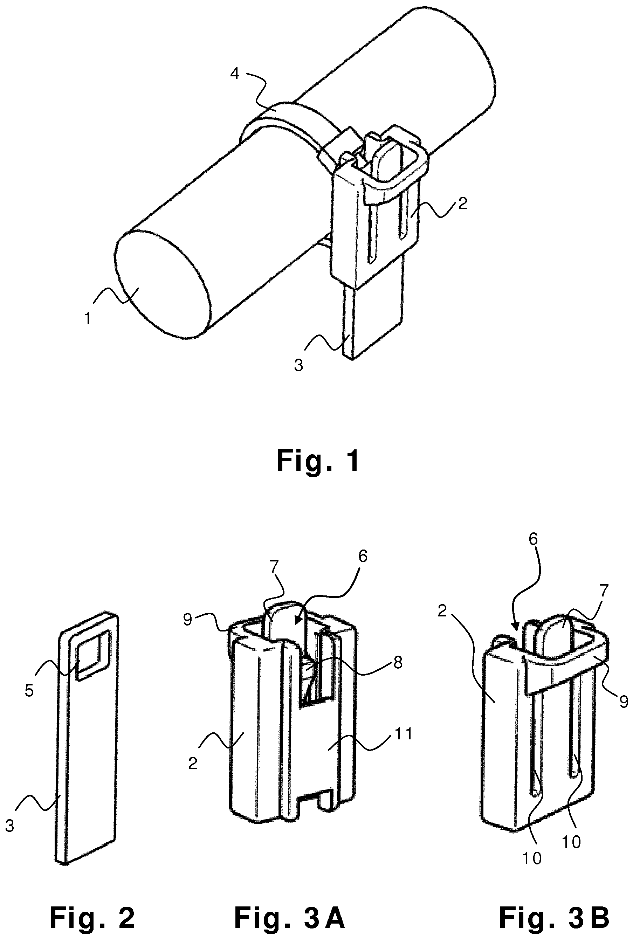

Fig. 1 zeigt eine Anordnung mit einem damit befestigten langgestreckten Gegenstand 1 nach einem ersten Ausführungsbeispiel. Der langgestreckte Gegenstand ist beispielsweise eine Fluidtransportleitung oder ein elektrischer Kabelstrang. Im Folgenden wird statt der Worte "langgestreckter Gegenstand" das Wort "Leitung" verwendet.

Die Anordnung umfaßt ein Befestigungselement 2, an welchem die Leitung 1 mittels eines Befestigungsmittels 4 befestigt ist, und ein Aufnahmeelement 3. Das Befestigungsmittel 4 ist beispielsweise ein Kabelbinder. Das Befestigungselement 2 mit der daran angebrachten Leitung 1 ist auf das Aufnahmeelement 3 aufgesteckt. Die beiden Elemente 2 und 3 rasten durch einen Rastmechanismus ineinander ein.

Fig. 2 zeigt das Aufnahmeelement 3 der Anordnung nach Fig. 1 als Einzelteil. Es handelt sich um ein längliches Element, welches in einem Randbereich eine Öffnung 5 aufweist. Die Öffnung 5 ist Teil des Rastmechanismusses zwischen dem Aufnahmeelement 3 und dem Befestigungselement 2. Das Aufnahmeelement 3 besteht beispielsweise aus Metall. Es ist in Montageposition an einem Fixpunkt im Kraftfahrzeug, beispielsweise am Motor oder anderen Bauteilen im Motorraum oder an der Karosserie selbst, befestigt. Es kann beispielsweise angeschraubt sein. Das Aufnahmeelement 3 funktioniert als Halterung für die Leitung 1.

In den Fig. 3A und 3B ist das Befestigungselement 2 der Anordnung aus Fig. 1 in zwei Einzelansichten gezeigt. Das Befestigungselement 2 hat eine quaderförmige, hohle Form. Mit seiner durchgehenden Öffnung 6 kann das Befestigungselement 2 auf das Aufnahmeelement 3 aufgesteckt werden. Das Befestigungselement 2 hat als Teil des Rastmechanismusses einen Entriegelungshebel 7, der einen Rastkeil 8 aufweist. In dem dargestellten Ausführungsbeispiel ist der Entriegelungshebel 7 durch zwei Schlitze 10 in einer Wandung des Befestigungselements 2 gebildet. Das Befestigungselement 2 muß deshalb aus einem biegsamen Material, beispielsweise aus Kunststoff, bestehen.

Zum Befestigen der Leitung 1 wird zunächst das Befestigungselement 2 mittels des Befestigungsmittels 4, beispielsweise dem Kabelbinder, an der Leitung 1 befestigt. Diese Verbindung ist dauerhaft. Anschließend wird das Befestigungselement 2 auf das Aufnahmeelement 3 aufgesteckt. Der Rastkeil 8 des Entriegelungshebels 7 greift in Montageposition in die Öffnung 5 des Aufnahmeelements 3 ein. Dadurch sind das Befestigungselement 2 und das Aufnahmeelement 3 lösbar miteinander verbunden, und das Befestigungselement 2 ist ebenso wie das Aufnahmeelement 3 an dem Fixpunkt festgelegt. Zum Lösen und Entfernen des Befestigungselements 2 wird der Entriegelungshebel 7 von dem Aufnahmeelement 3 weggebogen, sodaß der Rastkeil 8 aus der Öffnung 5 des Aufnahmeelements 3 entfernt wird. Die Leitung 1 bleibt mit dem Befestigungselement 2 verbunden und kann mit diesem vom Aufnahmeelement 3 abgenommen werden. Nach erfolgten Austausch- oder Reparaturarbeiten an den von der Leitung 1 bedeckten Bauteilen kann die Leitung 1 wieder in ihre Montageposition zurückgebracht und mittels des Befestigungselements 2 an dem am Fixpunkt angebrachten Aufnahmeelement 3 befestigt werden.

Wie in Fig. 3B besonders gut erkennbar, hat das Befestigungselement 2 in dem dargestellten Ausführungsbeispiel einen Sicherungsbügel 9, mit dem verhindert werden soll, daß der Entriegelungshebel 7 zu weit aus seiner Ruhestellung hinausgebogen und beschädigt wird.

Bezugnehmend insbesondere auf Fig. 3A, weist das Befestigungselement 2 weiterhin in seiner dem Entriegelungshebel 7 gegenüberliegenden Wandung eine Vorrichtung 11 zum Anbringen des Befestigungsmittels 4 auf. In dem gezeigten Ausführungsbeispiel handelt es sich bei der Vorrichtung um eine Aufnahme 11 für einen Kabelbinder. Ein Kabelbinder kann von oben oder unten in die Aufnahme 11 eingeführt werden. Damit kann das Befestigungselement 2 dauerhaft an einer Leitung 1 befestigt werden.

Nach einem anderen, nicht dargestellten Ausführungsbeispiel kann das Befestigungsmittel auch eine Anbindelasche umfassen, welche Teil des Befestigungselements 2 ist. Die Anbindelasche kann dann beispielsweise mittels Klebeband an der Leitung 1 befestigt werden.

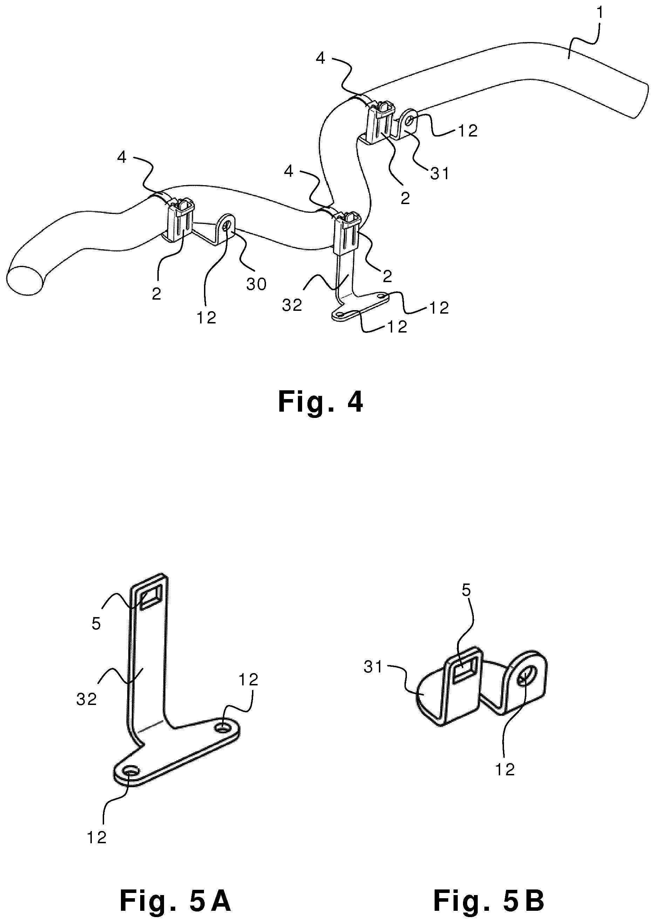

Fig. 4 zeigt eine Leitung 1 mit drei daran angebrachten Anordnungen in verschiedenen Ausführungsformen. Die Leitung 1 kann so beispielsweise im Motorraum eines Kraftfahrzeugs lösbar befestigt werden. Die drei dargestellten Anordnungen
bestehen jeweils aus einem Befestigungselement 2, einem Kabelbinder 4 und einem Aufnahmeelement 30 bzw. 31 bzw. 32.

Die Aufnahmeelemente 30, 31 und 32 sind jeweils so gewählt, daß sie den spezifischen Gegebenheiten des Verlegeorts, beispielsweise des Motorraums im Kraftfahrzeug, angepaßt sind. Beispielsweise können die beiden äußeren, kompakten Aufnahmeelemente 30 und 31 dazu dienen, die Leitung 1 an einem Bauteil im Motorraum zu befestigen. Das zentrale, längere Aufnahmeelement 32 ist beispielweise dazu geeignet, die Leitung 1 direkt an der Karosserie des Fahrzeugs festzulegen. Die Fig. 5A und 5B zeigen die Aufnahmeelemente 30 und 31 in vergrößerter Darstellung. Die Aufnahmeelemente 30, 31 und 32 haben jeweils eine oder mehrere Bohrungen 12, um am jeweiligen Fixpunkt beispielsweise angeschraubt werden zu können. Die Aufnahmeelemente können noch zusätzliche Funktionen haben, beispielsweise als Halterungen für andere Elemente oder Bauteile im Motorraum.

## Patentansprüche

1. Anordnung zum Befestigen mindestens eines langgestreckten Gegenstandes (1) in einem Kraftfahrzeug, welche ein in Montageposition an einem Fixpunkt des Kraftfahrzeugs befestigtes Aufnahmeelement (3) aufweist, mit dem in Montageposition ein Befestigungselement (2) durch einen lösbaren Rastmechanismus (5,7,8) verbunden ist, an dem ein mit dem langgestreckten Gegenstand (1) verbundenes Befestigungsmittel (4) angebracht ist, **dadurch gekennzeichnet,**
- **dass** das Befestigungselement (2) als Teil des Rastmechanismusses einen Entriegelungshebel (7) aufweist, welcher in Montageposition mit einem an demselben angebrachten Rastkeil (8) in eine einen anderen Teil des Rastmechanismusses bildende Öffnung (5) des Aufnahmeelements (3) eingreift,
- **dass** der Entriegelungshebel (7) als Teil des Befestigungselements (2) durch zwei in einer Wandung desselben angebrachte Schlitze gebildet und derart biegbar mit demselben verbunden ist, dass der Rastkeil (8) ohne Werkzeug aus der Öffnung (5) des Aufnahmeelements (3) entfernbar ist, und
- **dass** an dem Befestigungselement (2) ein Sicherungsbügel (9) zur Begrenzung des Weges des Entriegelungshebels (7) bei dessen Herausbiegen aus der Montageposition angebracht ist.

2. Anordnung nach Anspruch 1, **dadurch gekennzeichnet, daß** der langgestreckte Gegenstand (1) ein elektrischer Kabelbaum oder eine Fluidtransportleitung ist.

3. Verwendung einer Anordnung nach Anspruch 1 im Motorraum eines Kraftfahrzeugs.

## Claims

1. An arrangement for fastening at least one elongated object (1) in a motor vehicle, which in the mounting position has a receiving element (3) fastened at a fixed point of the motor vehicle, with which in the mounting position a fastening element (2) is connected by a detachable latching mechanism (5, 7, 8), to which a fastening means (4) connected to the elongated object (1) is attached, **characterized in**
- **that** the fastening element (2) as part of the latching mechanism has a release lever (7), which in the mounting position engages with a latch part (8) attached to the same into an opening (5) of the receiving element (3) forming another part of the latching mechanism,
- **that** the release lever (7) as part of the fastening element (2) is formed by two slots mounted in a wall of the same and is connected bendably with the same in such a manner that the latch part (8) is removed without a tool from the opening (5) of the receiving element (3), and
- **that** a securing clip (9) is attached to the fastening element (2) for limiting the path of the release lever (7) when it bends out of the mounting position.

2. An arrangement according to Claim 1, **characterized in that** the elongated object (1) is an electrical cable harness or a fluid-conveying conduit.

3. A use of an arrangement according to Claim 1 in an engine compartment of a motor vehicle.

## Revendications

1. Système de fixation d'au moins un objet (1) longitudinal dans un véhicule automobile qui, en position de montage, comprend un élément de réception (3) qui est fixé à un point fixe du véhicule automobile et auquel, en position de montage, un élément de fixation (2) est raccordé par un mécanisme d'encliquetage (5, 7, 8) détachable sur lequel est mis en place un moyen de fixation (4) raccordé à l'objet (1) longitudinal, **caractérisé en ce que**
- l'élément de fixation (2) comporte, en tant que partie du mécanisme d'encliquetage, un levier de déverrouillage (7) qui, en position de montage, engrène, avec un coin d'encliquetage (8) mis en place sur le levier, dans une ouverture (5) de l'élément de réception (3) qui forme une autre partie du mécanisme d'encliquetage,
- le levier de déverrouillage (7), en tant que partie de l'élément de fixation (2), est formé par deux fentes mises en place dans une paroi de cet élément, et est raccordé de façon flexible à cet élément de telle sorte que le coin d'encliquetage (8) peut être enlevé sans outil de l'ouverture (5) de l'élément de réception (3), et
- un étrier de blocage (9), destiné à limiter le déplacement du levier de déverrouillage (7) lorsque celui-ci est extrait par flexion de la position de montage, est mis en place sur l'élément de fixation (2).

2. système selon la revendication 1, **caractérisé en ce que** l'objet (1) longitudinal est un faisceau de câbles électriques ou une conduite de transport de fluide.

3. Utilisation d'un système selon la revendication 1 dans le compartiment moteur d'un véhicule automobile.
